# EUROPEAN PATENT SPECIFICATION

(11) **EP 2 398 116 B1**
(45) Date of publication and mention of the grant of the patent: **05.12.2012**
(21) Application number: 10006192.8
(22) Date of filing: 15.06.2010
(51) Int. Cl.: H01R 13/74, H01R 13/518, H04Q 1/14

(54) **Patch panel and patch system comprising a patch panel**
Schalttafel und Schaltsystem mit einer Schalttafel
Tableau de raccordement et système de raccordement comportant un tableau de raccordement

(43) Date of publication of application: 21.12.2011
(73) Proprietor: Tyco Electronics Raychem BVBA, 3010 Kessel-Lo (BE)
(72) Inventor: Geens, Johan, 3380 Bunsbeek (BE); Vermeulen, Pieter, 2260 Westerlo (BE)
(74) Representative: Grünecker, Kinkeldey, Stockmair & Schwanhäusser

(56) References cited:
- US-A- 5 083 941
- US-A- 5 238 426
- US-A1- 2006 025 010

## Description

The patent invention relates to a patch panel defining multiple patch positions, each patch position comprising opposing side walls defined by said patch panel.

Such patch panel is generally known in the art. The patch panel comprises multiple recesses, each of which are regularly defined by wall sections, which define a rectangular recess. This rectangular recess is adapted to receive a patch element. Such patch element may be an adapter or a plug. The adapter usually has a patch housing with lateral side walls, which define a width of the patch housing adapted to fit between opposing side walls and usually a height, which corresponds to the distance between the other two side walls of the patch panel extending perpendicular to the first two opposing side walls and defining a patch position. In other words, the rectangular recess is adapted to receive the patch element of rectangular cross section. Thus, when being introduced into a patch position, i.e. the rectangular recess of the patch panel provided to define such patch position, the patch element is securely held in place and, thus, secured in the patch panel preventing the same from moving in a direction essentially parallel to the plane of the patch panel.

Further, and in order to secure the patch element in insertion direction, i.e. in a direction perpendicular to the extension of the patch panel, the patch housing has at least two flanges on opposing sides of the patch housing. Those flanges projecting lateral side walls of the patch element housing are adapted to abut a front face of the patch panel. Assigned to each of said flanges, there is provided an elastic element. Said elastic element is adapted to cooperate with a back face of the patch panel. Thus, in the mounted state of the patch element, i.e. after insertion of the patch element, the patch panel is sandwiched between the elastic elements and the flanges and thereby secured in insertion direction of the patch element relative to the patch panel.

US 2006/0025010 A1 discloses a path panel as defined in the preamble of claim 1. Specifically, this prior art document discloses a cabling system for use in installing cable to an equipment rack or enclosure or within an equipment room or data center. The system further discloses a mounting bracket in the shape of a mounting rail to be mounted in a rack or for wall-mounting, which serves as a patch panel. This patch panel comprises a series of slots defined along the patch panel, and is disposed such that at least one of the slots receives one patch element. Each slot is sized and configured such that the slot receives at least a portion of the patch element to position the ports included in the patch element such that the ports are accessible to receive connective wiring from rack-mounted equipment components. The slot furthermore is receive connective wiring from rack-mounted equipment components. The slot furthermore is surrounded by opposing wall sections on one face of the patch panel. The wall sections are projected by at least one stop member protruding beyond one face of the patch panel to define a stop for the elastic element and restrict the patch element from movement in the slot.

The above described patch panel is unsuitable to receive patch elements in a rather compact configuration. In fact, each patch position requires the provision of wall sections surrounding the hole recessed within the patch panel and defining the patch position.

It is an object of the present invention to provide a patch panel suitable to hold multiple patch elements in a fairly compact manner.

As a solution to the above problem, the present invention provides a patch panel as defined in claim 1. This patch panel is characterized by at least one slot, which is adapted to receive at least one patch element. This slot is defined by opposing wall sections, which generally extend parallel to each other. The back face of those wall sections is protruded by at least one stop member. On a regular basis, for each patch position there is arranged at least one stop member on each of the two opposing wall sections. The stop members define a stop for the elastic member. Thus, by means of the stop members, the movement of the patch element within the slot is restricted.

In the patch panel, plural patch elements can be arranged in a single slot above each other in a stacked manner. One or multiple slots can form part of the inventive patch panel. In each of the slots, the patch elements are arranged essentially directly above each other. However, respective patch elements are usually not supported by the neighboring patch elements. Instead, the stop members are provided, which define a stop for the elastic element. In other words, the two elastic elements of the patch elements are not only adapted to cooperate with the back face of the patch panel and to position the patch element in a direction perpendicular to the plane of the patch panel, but also are adapted to cooperate with the stop members defining a stop to position the patch element in a direction parallel to the plane of the patch panel. Accordingly, the stop members limit the movement of the patch elements in a direction perpendicular to the insertion direction of the patch elements. Further, the patch elements can be received within the inventive patch panel in a very compact manner.

Stop members are provided for each patch position to define a stop of each elastic member of each patch element. Thus, each patch element is held within the patch panel in a predetermined position.

Provided that the patch panel is arranged such that the longitudinal extension of the slot corresponds with the direction of gravity, a single stop may be sufficient to hold each patch element against gravity in the patch position. Accordingly, a lower patch element may be removed from its patch position in case respective patch element needs to be replaced for maintenance and/or replacement of a broken patch element, while those patch element (S) being stacked above respective lower patch element will be held in place by the stop members. On a regular basis stop members on each of the opposing side wall sections are provided for each patch position, such that the two elastic elements on both lateral sides of the patch housing are equally supported. Thus, a specific orientation of the patch element relative to the patch panel can be secured, in particular in the event the slot is arranged parallel to the gravity field.

For this orientation or any other orientation, it is preferable to provide upper and lower stops for the elastic elements by the stop members, which upper and lower stops are provided for multiple patch positions. With this preferred embodiment, the patch element is perfectly held in place within the slot. The opposing wall sections will delimitate movement of the patch element in the patch position in a first direction, while the lower and upper stops will prevent respective patch element in the patch position to move in a direction perpendicular thereto. Finally, cooperation of the flanges and the elastic elements with the front face and the back face, respectively, of the patch panel will prevent the patch element from moving in insertion direction. It follows that each patch element is securely held in place by the associated stop members. Plural patch elements can be arranged within the slot in a rather compact manner. Mounting of each elastic element is very simple, as insertion of the patch element into the slot will be sufficient to arrange and securely position the patch element within the patch panel.

The above discussed configuration provides a positive locking of each patch element within the patch position without a need to provide a closed receptacle encompassing each single patch element but contributing to considerable spatial extension of the patch panel.

According to another preferred embodiment, the distance between the upper and the lower stop essentially corresponds to the height of the elastic elements. With this preferred embodiment, each patch element is received within the slot with minimum play and, thus, exactly positioned within the patch panel.

A very simple realization of the inventive patch panel, which avoids thickness variations of the material forming the patch panel, can be realized according to a preferred embodiment, in which the upper and lower stops are defined by bent portions of the opposing wall sections. Those bent portions are inclined toward the back face of the patch panel. Accordingly, surfaces are provided, which can e.g. extend perpendicular to the plane of the patch panel, which surfaces will provide the stops for the elastic elements. The bent portions do not have to result from a bending operation. The term "bent" is to refer to the inclined orientation of those portions. Further, the term should address the fact that the bent position and the panel sheet have approximately the same thickness.

A patch panel made e.g. of metal or a polymer can be manufactured economically as a mass product in the event the bent portions are formed by plastically deforming a sheet material constituting the patch panel. Such plastic deformation of the bent portions is preferably effected simultaneously for all bent portions. In other words, a single deformation stroke of an appropriate tool like a compression die may be sufficient to provide bent portions for each of plural slots and plural patch positions.

According to yet another preferred embodiment, multiple upper and lower stops are arranged on a single set of opposing walls, which set of opposing walls preferably defines the longitudinal rims of the slot. The distance between adjacent upper stops essentially corresponds to the height of the patch element housing. Further, the distance between adjacent lower stops likewise essentially corresponds to the height of the patch element housing. In other words, the stops are each arranged, such that the patch elements are provided next to each other almost like being stacked on top of each other. However, a certain tolerance may exist between neighboring patch elements received within their patch position to allow removal and/or insertion of a patch element in the event patch position directly adjacent to respective patch positions which have already been provided with a patch element.

The slot according to the present invention may be delimitated by upper and lower wall sections, which wall sections extend perpendicular to the opposing wall sections mentioned above. In other words, the slot may be a slot, which is closed on four sides. Alternatively, the slot may be open on one or two sides. In such an embodiment, wall sections being defined by the panel delimitating the slot in a direction perpendicular to the longitudinal extension of the slot will be missing. Closure of the slot on one or both end sides may be provided by a cover of a housing receiving the patch panel.

The present invention likewise defines a patch system. This patch system comprises a patch panel according to the invention and plural patch elements received within patch positions. In the inventive patch system, not all patch positions have to be assembled with a patch element. On a regular basis, a patch system of the present invention will have several patch positions, which are not yet mounted with patch elements.

A patch element in the meaning of the present application in particular is an adapter, which is adapted to receive two male connection elements of an optical fibre cable, which male connection elements are received within the adapter to effect an optical joint between the two optical cables within the adapter.

The present invention will be described in further detail with respect to the drawing. In the drawing
- Figure 1: is a perspective view of an embodiment of a patch panel from the front face;
- Figure 2: is an enlarged front view of a detail D of Figure 1;
- Figure 3: is a top view of the enlarged section of Figure 2;
- Figure 4: is a perspective side view of an optical connector as an embodiment of a patch element;
- Figures 5 through 8: show different phases of mounting the embodiment of a patch element of Figure 4 in the patch panel as exemplified in Figures 1 through 3, wherein
- Figures 5a, 6a, 7a, and 8a: are top views of those faces;
- Figures 5b, 6b, 7b, and 8b: are front views in accordance with Figure 1;
- Figures 5c, 6c, 7c, and 8c: are front views of the rear face of the embodiment; and
- Figure 9: is a front view of the rear face with the optical connector of Figure 4 being held in a patch position of the embodiment.

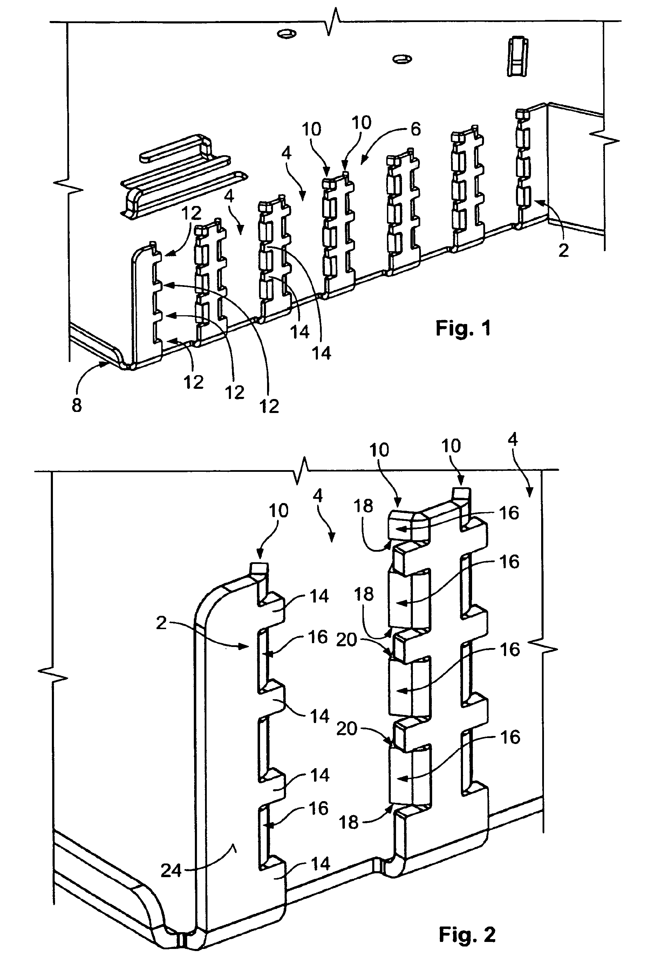

Figure 1 shows a perspective front view of a patch panel 2 being provided with six slots 4. Each slot 4 is open to an upper side of the patch panel 2 and being delimitated by a bottom 6 of a casing 8 holding the patch panel 2. Each slot 4 is defined by longitudinal wall sections 10 extending parallel to each other and in longitudinal direction of the slots 4. Those wall sections 10 form part of the patch panel 2. In the shown embodiment, each slot 4 provides four patch positions 12 being provided adjacent to each other and - with the orientation of the slots 4 in Figure 1 and 2 - above each other in the field of gravity.

Each wall section 10 contains four panel portions 14, which panel portions 14 lie within the major plane of the patch panel 2. Those panel portions 14 are at least on one end side thereof delimitated by stop members 16, which stop members 16 are made from bent portions of the patch panel material, which is a sheet material. Accordingly, upper and lower end faces of respective stop members 16 define upper stops 18 and lower stops 20, respectively. The stop member 16 provided at the upper end of the wall section 10 provides only an upper stop 18.

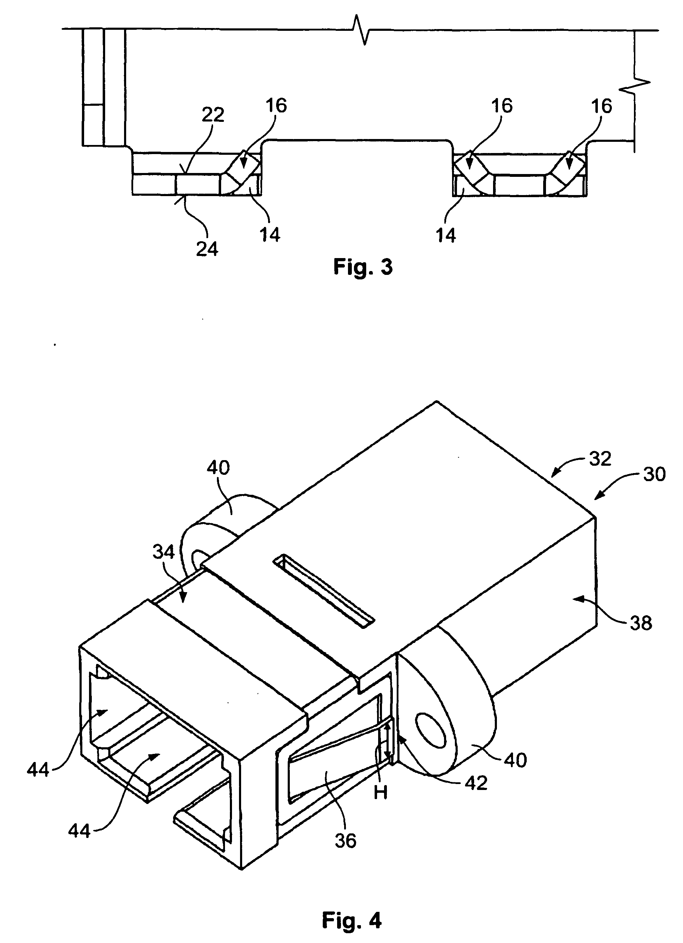

As visualized in Figure 3, the stop members 16 bent outwardly project a back face 22 of the patch panel 2, while a front face 24 of said patch panel 2 is flush.

In the embodiment of Figures 1 through 3, the patch panel 2 is made of a metal sheet material, which metal sheet material has undergone punching for cutting out the slots 4 and deforming i.e. bending the stop members 16. Those process steps are conducted with the sheet material being essentially flat. After this cutting and punching operation, the patch panel surface is provided by bending the sheet material by 90° to arrange the patch panel 2 with an orientation of 90° relative to the bottom 6 of the housing 8.

Figure 4 shows a perspective view of a connector adapter 30, which connector adapter 30 comprises a housing 32 made of a polymer, on which a metal locking spring 34 prepared by cutting and bending a metal sheet is secured. This metal locking spring 34 comprises two elastic elements 36 in form of spring legs prepared by punching of the metal material forming the metal locking spring 34 and protruding from the lateral side walls 38 of the housing 32. Those lateral side walls 38 are likewise protruded by flanges 40, which are integrally formed as part of the polymeric housing 32. The free ends of the elastic elements 36 and the opposing surfaces of the flanges 40 define a gap 42, which gap 42 is slightly greater than the thickness of the sheet material forming the patch panel 2.

The connector adapter 30 has inner guide surfaces 44 terminating at opposing end sides of the housing 32 and being provided for guiding two male elements of optical connectors 30 attached to optical cables to provide an optical interconnection within the housing 32.

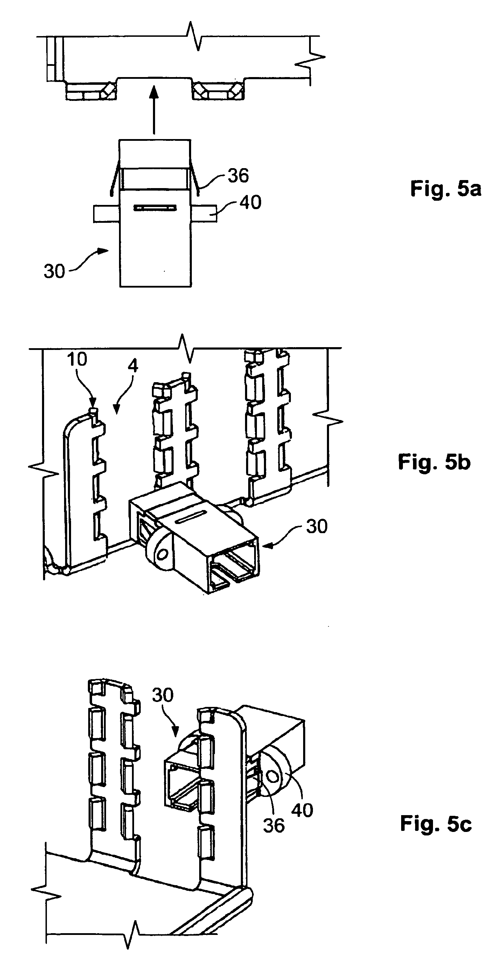

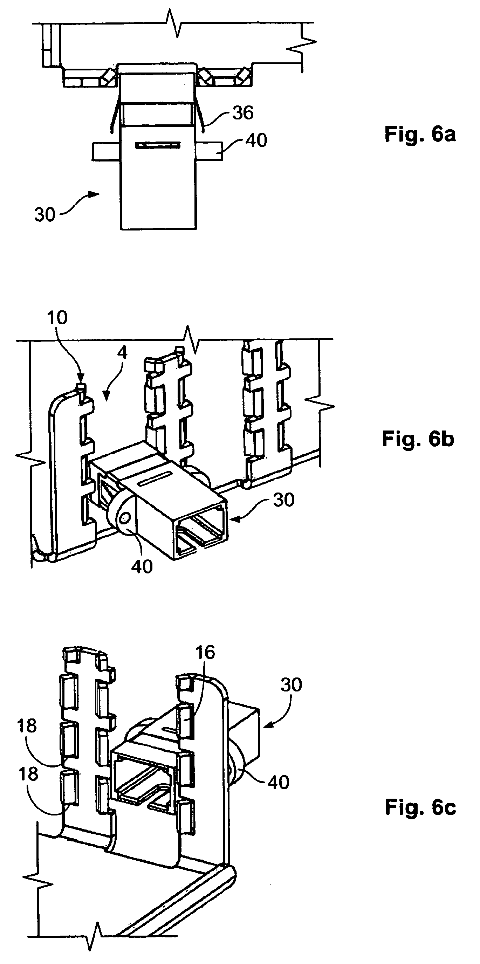

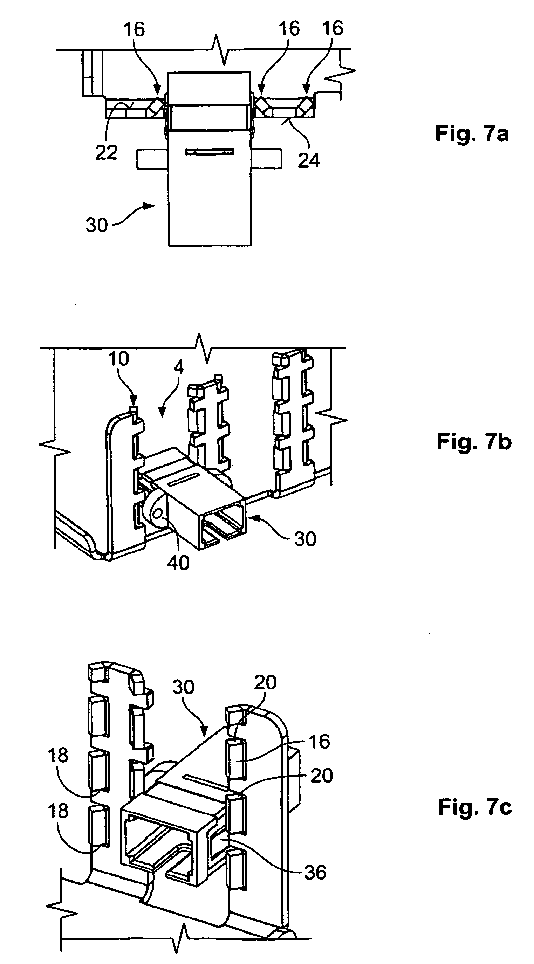

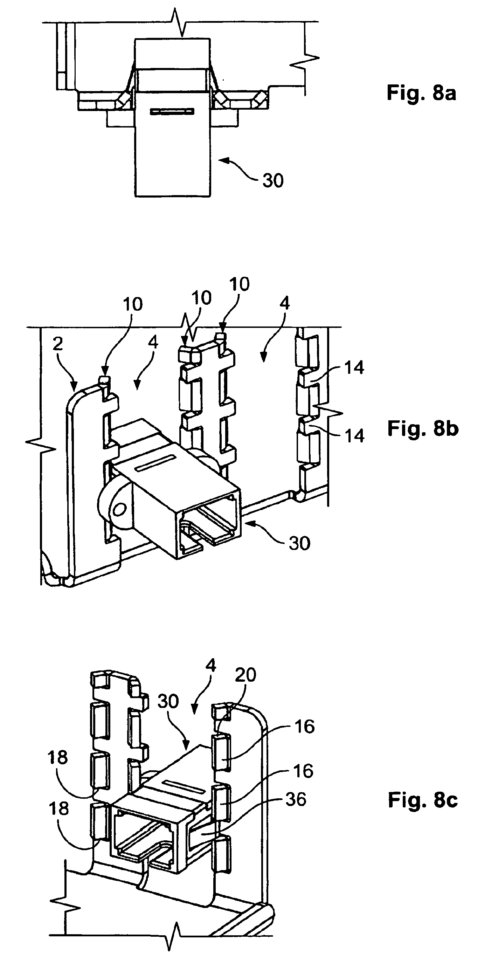

Mounting the optical connectors 30 in a patch position 12 is exemplified in Figures 5 through 8. Figure 5 shows an early stage of such insertion operation, Figure 6 exemplifies a position immediately after inserting front end of the connector adapter 30 into the assigned patch position 12 while Figure 7 shows a deeper insertion depth of the connector adapter 30 in the patch position 12. Finally, Figure 8 exemplifies the final positioning of the connector adapter 30 in the patch position 12.

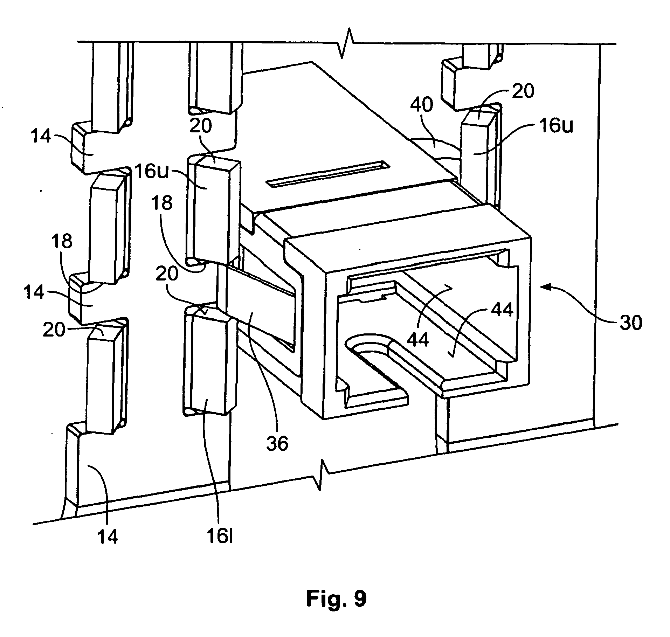

First, the connector adapter 30 is arranged in the assigned patch position 12. For this, the panel portion 14 being assigned to respective patch position 12 should essentially level with the elastic elements 36 of the optical connector 30. Then, the connector adapter 30 is pushed through the slot 4 in a direction perpendicular to the extension of the sheet material of the patch panel 2. With increasing insertion depth, the elastic elements 36 are forced inwardly by the panel portions 14. Once, the free end of the elastic elements 36 has passed the panel portion 14, the elastic force stored by the elastic elements 36 is released thereby the elastic elements 36 will hinge outwardly, such that the free end of the elastic elements 36 will cooperate with the back face 22 of the patch element 30. As the gap 42 is only slightly thicker than the thickness of the sheet material forming the patch panel 2, the flanges 40 abut the front face 24 of the patch panel 2. Movement of the connector adapter 30 in the insertion direction is, thus, limited by the tolerance between the gap 42 and the thickness of the sheet material of the patch panel 2. As in particular visible in Figure 8c and Figure 9, the free end of the elastic element 36 is received within the upper stop 18 of the respective patch position 12 and the lower stop 20 of respective patch position 12. Accordingly, movement of the connector adapter 30 in the longitudinal direction of the slot 4 is restricted to the tolerance of the distance between the two upper and lower stops 18, 20 and a height H of the elastic element. This tolerance is preferably selected, such that the movability of the optical connector 13 in the longitudinal direction of the slot 4 is almost not existing.

Due to the specific configuration of the patch panel 2 and the elastic element 36 provided by the connector adapter 30, the same is held in the patch panel 2 in a positive locking manner. The connector adapter 30 is prevented from moving in any direction relative to the patch panel 2 to a notable extent.

In Figure 9, a lower stop member 16I provides the lower stop 20, while an upper stop member 16u provides the upper stop 18 for the elastic element 36 of the connector adapter 30. This same upper stop member 16u will provide the lower stop 20 for a further optical connector to be inserted into a patch position 12 above the connector adapter 30 shown in Figure 9. This further connector adapter 30 can be provided essentially stacked directly upon the connector adapter 30, while being supported independent of respective connector adapter 30. Support of all connector adapters 30 is provided either by the associated upper and lower stops 18, 20 or - for the lowest patch position 12 in each slot 20 - between the bottom 6 and an upper stop 18 provided by the lowest supporting 16l. For this lowest optical connector to be received within a slot 4 respective bottom 6 defines the lower stop.

### Reference sign list

- 2: patch panel
- 4: slot
- 6: bottom
- 8: casing
- 10: wall section
- 12: patch position
- 14: panel portion
- 16: stop member
- 18: upper stop
- 20: lower stop
- 22: back face
- 24: front face
- 30: connector adapter/patch element
- 32: housing
- 34: metal locking spring
- 36: elastic element
- 38: lateral side wall
- 40: flange
- 42: gap
- 44: guide surface
- H: height

## Claims

1. Patch panel (2) defining at least one patch position (12), each patch position (12) comprising opposing wall sections (10) defined by said patch panel (2), wherein each patch position (12) is adapted to receive a patch element (30) having a patch element housing (32) with lateral side walls (38) having a width adapted to fit between the wall sections (10) and having projecting flanges (40) adapted to abut a front face (24) of said patch panel (2) and by elastic elements (36) arranged opposite to said flanges (40) and adapted to cooperate with a back face (22) of said patch panel (2), such that in the mounted state of said patch element (30) the patch panel (2) is sandwiched between the elastic elements (36) and the flanges (40),
**characterized by**
at least one slot (4) adapted to receive a plurality of patch elements (30) arranged above each other in a stocked manner within the slot, said slot (4) defined by opposing wall sections (10), which wall sections (10) on the back face (22) of said patch panel (2) have projecting stop members (16) protruding beyond the back face (22) to define a stop (18; 20) in the stocked direction for the elastic element (36), while restricting the patch element (30) from movement in the slot (4) in the

2. Patch panel (2) according to claim 1, **characterized in that** stop members (16) are provided for each patch position (12) to define a stop (18; 20) for the elastic element (36).

3. Patch panel (2) according to any of the preceding claims, **characterized in that** multiple patch positions (12) comprise stop members (16) providing upper and lower stops (18; 20) for the elastic elements (36).

4. Patch panel (2) according to claim 3, **characterized in that** the distance between the upper and the lower stops (18; 20) essentially corresponds to the height (H) of the elastic element (36).

5. Patch panel (2) according to any of the preceding claims, **characterized in that** the upper and the lower stops (18; 20) are defined by bent portions of the opposing wall sections (10), which bent portions (10) are inclined toward the back face (22) of the patch panel (2).

6. Patch panel (2) according to claim 5, **characterized in that** said bent portions are formed by plastically deforming a sheet material constituting said patch panel (2).

7. Patch panel (2) according to any of the preceding claims, **characterized in that** multiple upper and lower stops (18; 20) are arranged on a single set of opposing wall sections (10), wherein the distance between adjacent upper stops (18) and the distance between adjacent lower body steps (20) essentially corresponds to the height patch element housing (32).

8. Patch panel (2) according to any of the preceding claims, **characterized in that** a lower stop (18) of a patch position (12) in close vicinity to a bottom (6) of a casing (8) supporting the patch panel (2) is provided by said bottom (6).

9. Patch system comprising a patch panel (2) according to any of claims 1-8, and at least one patch element (30), said patch panel (2) defining at least one patch position (12), each patch position (12) comprising opposing wall sections (10) defined by said patch panel (2), wherein each patch position (12) is adapted to receive said patch element (30), wherein said patch element (30) has a patch element housing (32) with lateral side walls (38) having a width adapted to fit between the wall sections (10) of said patch panel (2) and being projected by flanges (40) adapted to abut a front face (24) of said patch panel (2) and by elastic elements (36) arranged opposite to said flanges (40) and adapted to cooperate with a back face (22) of said patch panel (2), such that in the mounted state of said patch element (30), the patch panel (2) is sandwiched between the elastic elements (36) and the flanges (40),
**characterized in that**
said patch panel (2) defines a slot (4) adapted to receive at least one patch element (30) and that the opposing wall sections (10) of said patch panel (2) defining said slot (4) on the back face (22) of said patch panel (2) are projected by stop members protruding beyond the back face (22) to define a stop (18, 20) for the elastic element (36) and restrict the patch element (30) form movement in the slot (4).

10. Patch system as defined in claim 9, **characterized by** a patch panel (2) as defined in any of the claims 2 to 8.

## Patentansprüche

1. Rangierfeld (2), das wenigstens eine Rangierposition (12) definiert, wobei jede Rangierposition (12) gegenüberliegende Wandsektionen (10) umfasst, die durch das Rangierfeld (2) definiert werden, wobei jede Rangierposition (12) dafür eingerichtet ist, ein Rangierelement (30) aufzunehmen, das ein Rangierelementgehäuse (32) hat, mit seitlichen Seitenwänden (38), die eine Breite haben, die dafür eingerichtet ist, zwischen die Wandsektionen (10) zu passen, und vorspringende Flansche (40), die dafür eingerichtet sind, an eine vordere Fläche (24) des Rangierfeldes (2) anzustoßen, und elastische Elemente (34), die gegenüber den Flanschen (40) angeordnet und dafür eingerichtet sind, mit einer hinteren Fläche (22) des Rangierfeldes (2) zusammenzuwirken, haben derart, dass in dem montierten Zustand des Rangierelementes (30) das Rangierfeld (2) zwischen den elastischen Elementen (36) und den Flanschen (40) eingeklemmt ist,
**gekennzeichnet durch**
wenigstens einen Schlitz (4), der dafür eingerichtet ist, mehrere Rangierelemente (30) aufzunehmen, die auf eine gestapelte Weise übereinander angeordnet sind, wobei der Schlitz (4) **durch** gegenüberliegende Wandsektionen (10) definiert wird, wobei die Wandsektionen (10) auf der hinteren Fläche (22) des Rangierfeldes (2) vorspringende Anschlagelemente (16) haben, die über die hintere Fläche (22) hinaus vorspringen, um einen Anschlag (18; 20) in der Stapelrichtung für das elastische Element (36) zu bilden, während das Rangierelement (30) gegen eine Bewegung in dem Schlitz (4) in der Einsteckrichtung eingeschränkt wird.

2. Rangierfeld (2) nach Anspruch 1, **dadurch gekennzeichnet, dass** Anschlagelemente (16) für jede Rangierposition (12) bereitgestellt werden, um einen Anschlag (18; 20) für das elastische Element (36) zu definieren.

3. Rangierfeld (2) nach einem der vorhergehenden Ansprüche, **dadurch gekennzeichnet, dass** mehrere Rangierpositionen (12) Anschlagelemente (16) umfassen, die obere und untere Anschläge (18; 20) für die elastischen Elemente (36) bereitstellen.

4. Rangierfeld (2) nach Anspruch 3, **dadurch gekennzeichnet, dass** der Abstand zwischen den oberen und den unteren Anschlägen (18; 20) der Höhe (H) des elastischen Elementes (36) entspricht.

5. Rangierfeld (2) nach einem der vorhergehenden Ansprüche, **dadurch gekennzeichnet, dass** die oberen und unteren Anschläge (18; 20) durch gebogene Abschnitte der gegenüberliegenden Wandsektionen (10) definiert werden, wobei die gebogenen Abschnitte (10) zu der hinteren Fläche (22) des Rangierfeldes (2) hin geneigt sind.

6. Rangierfeld (2) nach Anspruch 5, **dadurch gekennzeichnet, dass** die gebogenen Abschnitte durch ein plastisches Verformen eines Bahnmaterials, welches das Rangierfeld (2) ausmacht, geformt sind.

7. Rangierfeld (2) nach einem der vorhergehenden Ansprüche, **dadurch gekennzeichnet, dass** mehrere obere und untere Anschläge (18; 20) auf einem einzigen Satz von gegenüberliegenden Wandsektionen (10) angeordnet sind, wobei der Abstand zwischen benachbarten oberen Anschlägen (18) und der Abstand zwischen benachbarten unteren Korpusstufen (20) im Wesentlichen der Höhe des Rangierelementgehäuses (32) entsprechen.

8. Rangierfeld (2) nach einem der vorhergehenden Ansprüche, **dadurch gekennzeichnet, dass** ein unterer Anschlag (18) einer Rangierposition (12) in enger Nachbarschaft zu einem Boden (6) einer Ummantelung (8), der das Rangierfeld (2) stützt, durch den Boden (6) bereitgestellt wird.

9. Rangiersystem, das ein Rangierfeld (2) nach einem der Ansprüche 1 bis 8 und wenigstens ein Rangierelement (30) umfasst,
wobei das Rangierfeld (2) wenigstens eine Rangierposition (12) definiert, wobei jede Rangierposition (12) gegenüberliegende Wandsektionen (10) umfasst, die durch das Rangierfeld (2) definiert werden, wobei jede Rangierposition (12) dafür eingerichtet ist, das Rangierelement (30) aufzunehmen, wobei das Rangierelement (30) ein Rangierelementgehäuse (32) hat, mit seitlichen Seitenwänden (38), die eine Breite haben, die dafür eingerichtet ist, zwischen die Wandsektionen (10) zu passen, und von denen Flansche (40), die dafür eingerichtet sind, an eine vordere Fläche (24) des Rangierfeldes (2) anzustoßen, und elastische Elemente (34), die gegenüber den Flanschen (40) angeordnet und dafür eingerichtet sind, mit einer hinteren Fläche (22) des Rangierfeldes (2) zusammenzuwirken, vorspringen derart, dass in dem montierten Zustand des Rangierelementes (30) das Rangierfeld (2) zwischen den elastischen Elementen (36) und den Flanschen (40) eingeklemmt ist,
**dadurch gekennzeichnet, dass**
das Rangierfeld (2) einen Schlitz (4) definiert, der dafür eingerichtet ist, wenigstens ein Rangierelement (30) aufzunehmen, und dadurch, dass von der gegenüberliegenden Wandsektionen (10) des Rangierfeldes (2), die den Schlitz (4) definieren, auf der hinteren Fläche des Rangierfeldes (2) Anschlagelemente (16) vorspringen, die über die hintere Fläche (22) hinaus vorspringen, um einen Anschlag (18; 20) für das elastische Element (36) zu bilden und das Rangierelement (30) gegen eine Bewegung in dem Schlitz (4) einzuschränken.

10. Rangiersystem nach Anspruch 9, **gekennzeichnet durch** ein Rangierfeld (2) nach einem der Ansprüche 2 bis 8.

## Revendications

1. Tableau de connexions (2), définissant au moins une position de connexion (12), chaque position de connexion (12) comprenant des sections de paroi opposées (10) définies par ledit tableau de connexions (2), chaque position de connexion (12) étant adaptée pour recevoir un élément de connexion (30), comportant un boîtier d'élément de connexion (32) avec des parois latérales (38) ayant une largeur adaptée pour permettre un ajustement entre les sections de paroi (10), et comportant des brides à débordement (40), adaptées pour buter contre une face avant (24) dudit tableau de connexions (2), et des éléments élastiques (36) agencés en des emplacements opposés aux dites brides (40) et adaptés pour coopérer avec une face arrière (22) dudit tableau de connexions (2), de sorte que dans l'état monté dudit élément de connexion (30), le tableau de connexions est pris en sandwich entre les éléments élastiques (36) et les brides (40),
**caractérisé par**
au moins une fente (4), adaptée pour recevoir plusieurs éléments de connexion (30), agencés les uns au-dessus des autres par empilage dans la fente, ladite fente (4) étant définie par des sections de paroi opposées (10), ces sections de paroi (10) sur la face arrière (22) dudit tableau de connexions (2) comportant des éléments d'arrêt à débordement (16), débordant au-delà de la face arrière (22) pour définir un arrêt (18 ; 20) dans la direction d'empilage pour l'élément élastique (36), tout en empêchant le déplacement de l'élément de connexion (30) dans la fente (4) dans la direction d'insertion.

2. Tableau de connexions (2) selon la revendication 1, **caractérisé en ce que** des éléments d'arrêt (16) sont prévus pour chaque position de connexion (12) pour définir un arrêt (18 ; 20) pour l'élément élastique (36).

3. Tableau de connexions (2) selon l'une quelconque des revendications précédentes, **caractérisé en ce que** de multiples positions de connexion (12) comprennent des éléments d'arrêt (16), établissant des arrêts supérieurs et inférieurs (18 ; 20) pour les éléments élastiques (36).

4. Tableau de connexions (2) selon la revendication 3, **caractérisé en ce que** la distance entre les arrêts supérieurs et inférieurs (18 ; 20) correspond pour l'essentiel à la hauteur (H) de l'élément élastique (36).

5. Tableau de connexions (2) selon l'une quelconque des revendications précédentes, **caractérisé en ce que** les arrêts supérieurs et inférieurs (18 ; 20) sont définis par des parties fléchies des sections de paroi opposées (10), ces parties fléchies (10) étant inclinées vers la face arrière (22) du tableau de connexions (2).

6. Tableau de connexions (2) selon la revendication 5, **caractérisé en ce que** lesdites parties fléchies sont formées par déformation plastique d'un matériau de feuille constituant ledit tableau de connexions (2).

7. Tableau de connexions (2) selon l'une quelconque des revendications précédentes, **caractérisé en ce que** de multiples arrêts supérieurs et inférieurs (18 ; 20) sont agencés sur un seul groupe de sections de paroi opposées (10), la distance entre les arrêts supérieurs adjacents (18) et la distance entre les arrêts inférieurs adjacents (20) correspondant pour l'essentiel à la hauteur du boîtier de l'élément de connexion (32).

8. Tableau de connexions (2) selon l'une quelconque des revendications précédentes, **caractérisé en ce qu'**un arrêt inférieur (18) d'une position de connexion (12), à proximité étroite d'un fond (6) d'un boîtier (8) supportant le tableau de connexions (2), est établi par ledit fond (6).

9. Système de connexion, comprenant un tableau de connexions (2) selon l'une quelconque des revendications 1 à 8, et au moins un élément de connexion (30),
ledit tableau de connexions (2) définissant au moins une position de connexion (12), chaque position de connexion (12) comprenant des sections de paroi opposées (10) définies par ledit tableau de connexions (2), chaque position de connexion (2) étant adaptée pour recevoir ledit élément de connexion (30), ledit élément de connexion (30) comportant un boîtier d'élément de connexion (32) avec des parois latérales (38) ayant une largeur adaptée pour permettre un ajustement entre les sections de paroi (10) dudit tableau de connexions (2), et débordant par l'intermédiaire de saillies (40) adaptées pour buter contre une face avant (24) dudit tableau de connexions (2) et d'éléments élastiques (32) agencés en des emplacements opposés aux dites brides (40), et adaptés pour coopérer avec une face arrière (22) dudit tableau de connexions (2), de sorte que dans l'état monté dudit élément de connexion (30), le tableau de connexions (2) est pris en sandwich entre les éléments élastiques (36) et les brides (40) ;
**caractérisé en ce que**
ledit tableau de connexions (2) définit une fente (4), adaptée pour recevoir au moins un élément de connexion (30) et **en ce que** les sections de paroi opposées (10) dudit tableau de connexions (2), définissant ladite fente (4) sur la face arrière (22) dudit tableau de connexions (2), débordent par l'intermédiaire d'éléments d'arrêt débordant au-delà de la face arrière (22) pour définir un arrêt (18, 20) pour l'élément élastique (36), et empêchent le déplacement de l'élément de connexion (30) dans la fente (4).

10. Système de connexion selon la revendication 9, **caractérisé par** un tableau de connexions (2) selon l'une quelconque des revendications 2 à 8.
